# EUROPÄISCHE PATENTSCHRIFT

(11) **EP 0 380 033 B1**
(45) Veröffentlichungstag und Bekanntmachung des Hinweises auf die Patenterteilung: **01.09.1993**
(21) Anmeldenummer: 90101234.4
(22) Anmeldetag: 22.01.1990
(51) Int. Cl.: H02M 3/335

(54) **Schaltungsanordnung für ein freischwingendes Sperrwandler-Schaltnetzteil**
Circuit arrangement for a freely oscillating flyback switching power supply
Disposition de circuit pour alimentation à découpage à récuperation à circuit résonnant

(30) Priorität: 25.01.1989 DE 3902164
(43) Veröffentlichungstag der Anmeldung: 01.08.1990
(73) Patentinhaber: SIEMENS AKTIENGESELLSCHAFT, 80333 München (DE)
(72) Erfinder: Dangschat, Rainer, Dipl.-Ing. (FH), D-8011 Landsham (DE); Paulik, Ernst, D-8893 Hilgertshausen (DE)

(56) Entgegenhaltungen:
- DE-A- 3 312 209
- NL-A- 7 810 087

## Beschreibung

Die Erfindung betrifft eine Schaltungsanordnung für ein freischwingendes Sperrwandler-Schaltnetzteil nach dem Oberbegriff des Anspruchs 1.

Eine solche Schaltungsanordnung ist beispielsweise aus der DE 33 12 209 A1 bekannt. Zum pulsweitenmodulierten Ansteuern des elektrischen Schaltelementes, z. B. ein Thyristor oder ein Leistungs-MOS-Feldeffekttransistor, werden der Steuereinrichtung unter anderem zwei Regelinformationen zugeführt. Zum einen den Nulldurchgang der Schaltimpulse, um die vorhandene Frequenz und das vorhandene Tastverhältnis des Schaltelementes zu erkennen. Zum zweiten wird der Steuereinrichtung eine von der Ausgangsspannung des Schaltnetzteiles abhängige Regelspannung zugeführt, die in der Steuereinrichtung über einen Widerstand den invertierenden Eingang eines als Operationsverstärker realisierten Regelverstärkers zugeführt wird, an dessen nichtinvertierenden Eingang eine erste Referenzspannung anliegt. Dadurch werden der Steuereinrichtung der Pulsstart und die Pulsweite zum Ansteuern des Schaltelementes mitgeteilt.

Es hat sich gezeigt, daß bei dieser bekannten Schaltungsanordnung mit zunehmender Entlastung der Sekundärseite die Betriebsfrequenz des Schaltnetzteiles bis zu dessen Eigenfrequenz von typisch 150 kHz bis 200 kHz ansteigt. Dies führt zur Überhitzung des Schaltelementes, das bis zu dessen Zerstörung führen kann. Um zu vermeiden, daß auf der Sekundärseite des Schaltnetzteiles eine Grundlast und damit eine erhöhte Verlustleistung im Stand-by-Betrieb vorgesehen werden muß, wurde bei dieser bekannten Schaltungsanordnung vorgeschlagen, zwischen die Eingangsklemmen für das Nulldurchgangsdetektorsignal und die Regelspannung ein kapazitives Koppelnetzwerk anzuordnen. Dadurch wird das Nulldurchgangsdetektorsignal dem Spannungswert der Regelspannung überlagert. Durch diese Überlagerung können mehrere Impulsstarts zum Ansteuern des Schaltelementes unterdrückt werden. Eine durch Frequenzteilung der Eigenschwingung erreichte Betriebsfrequenz des Schaltnetzteiles ist die Folge.

Bei dieser reduzierten Betriebsfrequenz hat sich jedoch auch herausgestellt, daß die Ausgangsspannung zusätzlich in unerwünschter Weise, um etwa 10 bis 20 %, ansteigt. Dieses ist insbesondere deswegen von Nachteil, da sich im Stand-by-Betrieb ohnehin die Ausgangsspannung leicht erhöht. Ein weiteres Erhöhen der Ausgangsspannung ist deshalb unerwünscht.

Der vorliegenden Erfindung liegt deshalb die Aufgabe zugrunde, die bekannte Schaltungsanordnung für ein freischwingendes Sperrwandler-Schaltnetzteil derart weiterzubilden, daß ein Ansteigen der Ausgangsspannung im Stand-by-Betrieb unterbunden wird.

Diese Aufgabe wird durch die kennzeichnenden Merkmale des Anspruchs 1 gelöst.

Vorteilhafte Weiterbildungen der Erfindung sind Gegenstand der Unteransprüche.

Die Erfindung wird im folgenden anhand eines bevorzugten Ausführungsbeispieles und zwei Figuren näher erläutert. Es zeigen:
- FIG 1: eine erfindungsgemäße Schaltungsanordnung für ein freischwingendes Sperrwandler-Schaltnetzteil mit kapazitivem Koppelnetzwerk und Detektoreinrichtung, und
- FIG 2: die Spannung und Strom am Schaltelement bei Stand-by-Betrieb von 4 W sekundärseitig, sowie das dazugehörige Nulldurchgangsdetektorsignal und das Regelspannungssignal.

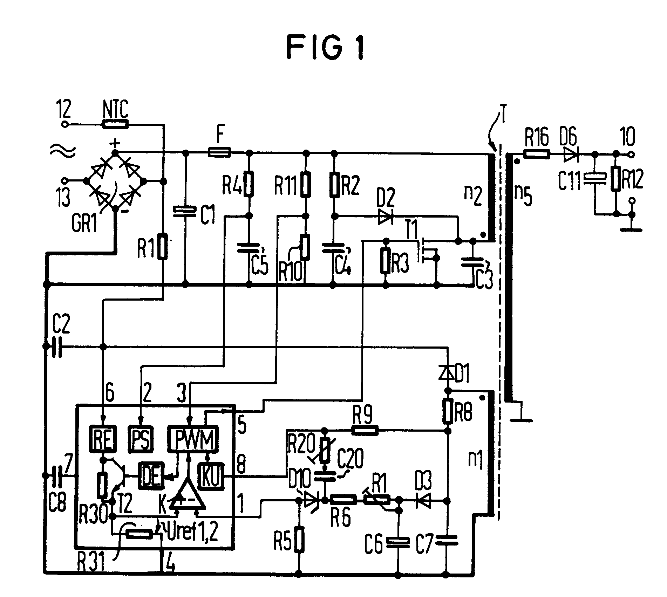

In FIG 1 ist die Schaltungsanordnung für ein freischwingendes Sperrwandler-Schaltnetzteil dargestellt, wie es im wesentlichen aus der Siemens-Produktinformation "ICs für die Unterhaltungselektronik, SNTs; Ausgabe 8.87" auf Seite 57 bekannt ist. Zum Erzeugen einer an den Ausgangsklemmen 10, 11 der Sekundärseite eines Übertragers T angeschlossenen Gleichrichteranordnung, bestehend aus dem Widerstand R16, der Diode D6, dem Kondensator C11 und dem Widerstand R12, gleichgerichteten Ausgangsspannung U_{A}, weist die Schaltungsanordnung ein steuerbares elektrisches Schaltelement T1, z. B. einen MOS-Leistungstransistor, auf, durch das an eine erste primärseitige Wicklung n₂ des Übertragers T eine Gleichspannung pulsweitenmoduliert anlegbar ist. Die Gleichspannung wird aus einer Wechselspannung von z. B. 90 bis 270 V an Eingangsklemmen 12, 13 des Schaltnetzteiles mit anschließendem Brückengleichrichter GR1 und Glättungskondensator C1 gewonnen und liegt zwischen der Serienschaltung der Laststrecke des Schaltelementes T1 und der ersten primärseitigen Wicklung n₂.

Zum Ansteuern des Schaltelementes T1 weist diese Schaltungsanordnung eine integrierte Steuereinrichtung IC, z. B. den integrierten Baustein TDA 4605 von Siemens, auf. Die Steuereinrichtung IC wird über ihren Anschluß 6 mit der notwendigen Speisespannung versorgt, aus der intern in der Steuereinrichtung IC die notwendigen Referenzspannungen und Schaltschwellen festgelegt werden, während der Anschluß 4 auf Bezugspotential der Primärseite des Schaltnetzteiles liegt. Der als Ausgang wirkende Anschluß 5 der Steuereinrichtung IC ist mit dem Steueranschluß des elektrischen Schaltelementes T1 verbunden. Zum pulsweitenmodulierten Ansteuern dieses Schaltelementes T1 erhält die Steuereinrichtung IC an einer ersten Eingangsklemme, hier Anschluß 2, ein Primärstromsignal. Der Primärstromanstieg in der primärseitigen ersten Wicklung n₂ des Übertragers T wird mittels RC-Glied, bestehend aus dem parallel zur gleichgerichteten Wechselspannung geschalteten Widerstand R4 und Kondensator C5, als Spannungsanstieg am Anschluß 2 nachgebildet. Bei Erreichen eines von der Regelspannung am noch zu erläuternden Anschluß 1 abgeleiteten Wert, wird der Ausgangsimpuls am Ausgang des Anschlusses 5 beendet.

Zum exakten Ansteuern des Schaltelementes T1 sind weitere zwei Informationen notwendig. An einer zweiten Eingangsklemme, hier Anschluß 8, erhält die Steuereinrichtung IC ein Nulldurchgangsdetektorsignal U_{Null}, das den Impulsstart bestimmt. An einer dritten Eingangsklemme, hier Anschluß 1, wird der Steuereinrichtung IC eine von der Ausgangsspannung U_{A} abhängige Regelspannung U_{R} zugeführt. Dies erfolgt zweckmäßigerweise mit einer zur sekundärseitigen Wicklung n₅ festgekoppelten zweiten primärseitigen Wicklung n₁, die mit einer Gleichrichteranordnung D3, C6, R7 und R6 sowie R5 gebildet ist. Damit steht am Anschluß 1 der Steuereinrichtung IC eine zur Ausgangsspannung U_{A} proportionale Regelspannung U_{R} an. Das Nulldurchgangsdetektorsignal U_{Null} wird ebenfalls an der zweiten primärseitigen Wikklung n₁ durch die Widerstände R8 und R9 an den Anschluß 8 der integrierten Steuereinrichtung IC gelegt. Durch Vergleich der aus der zweiten primärseitigen Wicklung n₁ des Übertragers T gewonnenen Regelspannung U_{R}, die in der Steuereinrichtung IC dem nicht invertierenden Eingang eines Komparatorverstärkers K zugeführt wird, mit einer internen Referenz-Spannung U_{ref}, die an den invertierenden Eingang des Komparatorverstärkers K gelegt ist, wird die Ausgangsimpulsbreite und damit die Pulsweite am Anschluß 5 der Steuereinrichtung IC der sekundärseitigen Last angepaßt. Nach dem Anschwingen des Schaltnetzteiles löst jeder Nulldurchgang der Rückkopplungsspannung und damit das Nulldurchgangsdetektorsignal U_{Null} am Anschluß 8 der Steuereinrichtung IC einen Ausgangsimpuls am Anschluß 5 aus.

Um im Stand-by-Betrieb zu gewährleisten, daß das Sperrwandler-Schaltnetzteil nicht auf seiner Eigenfrequenz von typisch 150 kHz bis 200 kHz schwingt und damit das Schaltelement T1 stark überlastet wird, ist zwischen die zweite und dritte Eingangsklemme, hier die Anschlüsse 1 und 8 der Steuereinrichtung IC, ein kapazitives Koppelnetzwerk bestehend in diesem Ausführungsbeispiel aus der Reihenschaltung eines Widerstandes R20 und eines Kondensators C20 geschaltet. Zusätzlich liegt zwischen Anschluß 1 und dem Kondensator C20 zur Strombegrenzung eine Zenerdiode D10, die jedoch nicht unbedingt notwendig ist, jedoch zur Begrenzung der Regelsteilheit zweckmäßig. Diese kapazitive Verbindung zwischen den Anschlüssen 1 und 8 der Steuereinrichtung IC bewirkt, daß der in der Steuereinrichtung IC vorgesehene Pulsweitenmodulator PWM im Stand-by-Betrieb mit einer zu niedrigen Regelspannung U_{R} beaufschlagt wird und die Betriebsfrequenz des Schaltnetzteiles im Stand-by-Betrieb gezielt auf eine niedrige Frequenz zwischen 16 kHz und 30 kHz einstellbar ist. Es ist hierbei wichtig, daß die Betriebsfrequenz des Schaltnetzteiles auf alle Fälle über dem Hörbereich liegt um so unangenehme Störungen zu vermeiden.

Diese niedrige Betriebsfrequenz des Schaltnetzteiles im Stand-by-Betrieb hat jedoch den Nachteil, daß die im Stand-by-Betrieb ohnehin leicht ansteigende Ausgangsspannung U_{A} zusätzlich erhöht wird. Um dies zu vermeiden, ist die Schaltungsanordnung um eine Detektoreinrichtung DE erweitert, durch die der Beginn des Stand-by-Betriebes mit reduzierter Betriebsfrequenz erfaßbar ist. Diese Detektoreinrichtung DE ist mit einer Referenzspannungseinrichtung RE verbunden und derart ausgestaltet, daß das Referenzsignal, hier die Referenzspannung U_{ref}, während des Stand-by-Betriebes derart variierbar ist, daß die Ausgangsspannung U_{A} reduziert ist.

Im einzelnen weist die Steuereinrichtung IC dazu einen an den Anschluß 5 angekoppelten Pulsweitenmodulator PWM auf, der neben einem am Anschluß 3 anliegenden Primärspannungsüberwachungssignal noch folgende weitere Informationen erhält: Ein Primärstromsignal aus einem an Anschluß 2 anliegendem Signal bezüglich der Primärspannung, das über eine Primärstromstufe PS zugeführt wird, ein über eine Klingelunterdrückungsstufe KU geführtes und am Anschluß 8 anstehendes Nulldurchgangsdetektorsignal U_{Null} und ein am Anschluß 1 anstehendes Signal der Regelspannung U_{R}, das dem invertierenden Eingang eines Komparatorverstärkers K zugeführt wird, dessen Ausgang mit dem Pulsweitenmodulator PWM verbunden ist. Am nichtinvertierenden Eingang dieses Komparatorverstärkers K liegt eine Referenzspannung U_{ref} ₁,₂ an, die aus einer Referenzspannungseinrichtung RE, welche mit dem Anschluß 6 in Verbindung steht, gewonnen wird. Gemäß der Erfindung ist die am nichtinvertierenden Eingang des Komparatorverstärkers K anstehende Referenzspannung U_{ref} ₁,₂ mindestens zwischen zwei Werten umschaltbar. Dies erfolgt in Abhängigkeit von der Betriebsfrequenz des Pulsweitenmodulators PWM über eine Detektoreinrichtung DE, die den Beginn des Stand-by-Betriebes mit reduzierter Betriebsfrequenz von z. B. 25 kHz erfaßt und mit dem Ausgang der Referenzsignaleinrichtung RE derart verbunden ist, daß das Referenzsignal, in diesem Fall die Referenzspannung U_{ref} ₁,₂ während des Stand-by-Betriebes derart variierbar ist, daß die Ausgangsspannung des Schaltnetzteiles im Vergleich zur sonst üblichen Ausgangsspannung im Stand-by-Betrieb reduziert wird. Dazu ist am Ausgang der Detektoreinrichtung DE z. B. ein Schaltelement T2 vorgesehen, mit dessen Hilfe ein Spannungsteiler bestehend aus den Widerständen R30 und R31 derart umschaltbar ist, daß die Referenzspannung U_{ref} ₁,₂ zwischen zwei Werten wählbar ist. Ist die Detektoreinrichtung DE als Frequenzerfassungseinrichtung ausgebildet und detektiert diese Frequenzerfassungseinrichtung die reduzierte Betriebsfrequenz im Stand-by-Betrieb, so wird in diesem Ausführungsbeispiel das Schaltelement T2 ausgeschaltet um den Widerstand R30 wirksam werden zu lassen. Dadurch wird die Referenzspannung U_{ref} vermindert, vorzugsweise um 20 %. Durch diese "Verziehen" der Referenzspannung nach kleineren Werten, wird dem nicht invertierenden Eingang des Komparatorverstärkers K eine kleinere Referenzspannung zugeführt und dadurch das am Ausgang des Komparatorverstärkers K anstehende Ausgangssignal vergrößert. Die Folge ist eine Verminderung der Ausgangsspannung des Sperrwandler-Schaltnetzteiles.

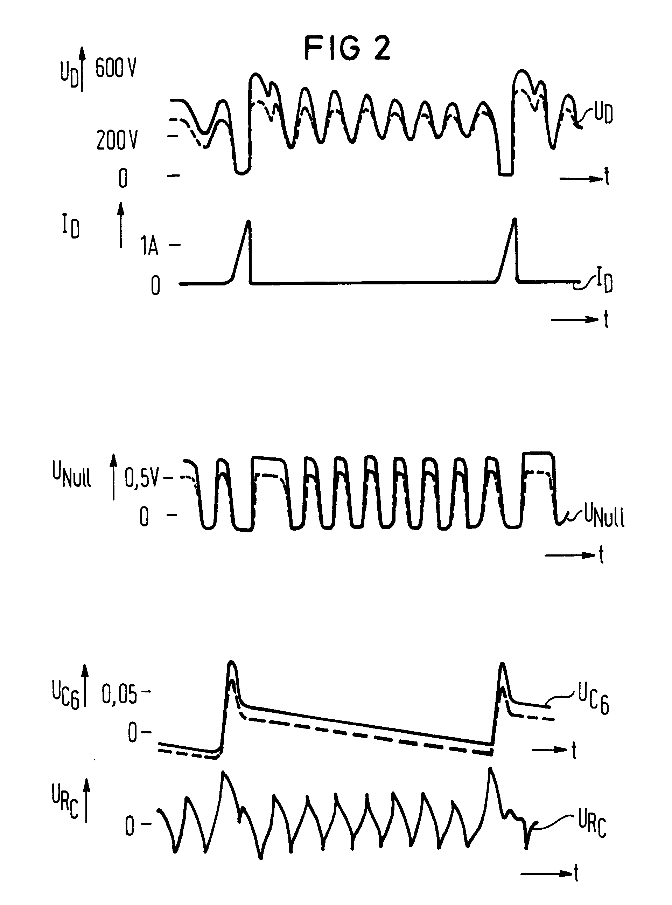

Ist beispielsweise bei der erfindungsgemäßen Schaltungsanordnung eine Klingelunterdrückungsstufe KU zwischen dem Pulsweitenmodulator PWM und dem Anschluß 8 angeordnet und wird der Widerstand R20 des kapazitiven Koppelnetzwerkes variabel ausgeführt, so kann die Stand-by-Frequenz des Schaltnetzteiles gezielt auf eine Frequenz von z. B. 25 kHz eingestellt werden. Die im folgenden noch zu erläuternde FIG 2 verdeutlicht nochmals die Wirkungsweise des erfindungsgemäßen Schaltnetzteiles.

In FIG. 2 sind die für das Verständnis der Wirkungsweise der vorliegenden Schaltungsanordnung notwendigen Signale in ihrer zeitlichen Abhängigkeit zueinander dargestellt. Mit den Bezugszeichen U_{D} ist die Spannung am und mit I_{D} der Strom durch das Schaltelement bezeichnet. U_{Null} kennzeichnet das am Anschluß 8 anliegende Nulldurchgangsdetektorsignal, während U_{R} die Regelspannung am Kondensator C6 bezeichnet. Mit U_{RC} sind die differenzierten Nulldurchgänge über das kapazitive Koppelnetzwerk, bestehend aus der Reihenschaltung des Widerstandes R115 und des Kondensators C109, bezeichnet. Durch das Beschalten der Anschlüsse 1 und 8 der Steuereinrichtung IC wird die Betriebsfrequenz des Schaltnetzteiles im Stand-by-Betrieb auf ca. 25 kHz begrenzt. Diese niedrige Frequenz wird erreicht, weil eine Anzahl der Nulldurchgänge des Nulldurchgangsdetektorsignals U_{Null} ignoriert wird. Diese geschieht durch das kapazitive Koppelnetzwerk, das der Steuereinrichtung IC eine zu niedrige Regelspannung im Stand-by-Betrieb vortäuscht, so daß der am Schaltelement T1 entstehende Stromimpuls verhältnismäßig groß ausfällt. Der in der Steuereinrichtung IC enthaltene Komparatorverstärker K wird mit daraus resultierenden Übertragerentladung stark übersteuert. Nach Abklingen der Spannung wird erst der nächste Impuls wieder freigegeben.

Während die durchgezogenen Kurven in FIG 2 die Signale bei einem unveränderten Referenzsignal zeigen, sind die strichlierten Kurven im Stand-by-Betrieb bei um 20 % reduziertem Referenzsignal aufgenommen.

## Patentansprüche

1. Freischwingendes Sperrwandler-Schaltnetzteil mit einer Schaltungsanordnung zum Erzeugen einer Ausgangsspannung (U_{A}) mit einem elektrischen Schaltelement (T1) zum getakteten Anlegen einer Gleichspannung an eine erste Wicklung (n₂) eines Übertragers (T) unter Verwendung einer Steuereinrichtung (IC) zum pulsweitenmodulierten Ansteuern des elektrischen Schaltelementes (T1) nach Maßgabe mindestens eines an einer ersten Eingangsklemme (2) anschließbaren Primärstromsignals, eines an einer zweiten Eingangsklemme (8) anschließbaren und den Impulsstart bestimmenden Nulldurchgangssignales (U_{Null}) sowie eines aus einem Komparatorverstärker (K) gewonnenen und die Impulsweite bestimmenden Differenzsignales, wobei am ersten Steuereingang des Komparatorverstärkers (K) ein aus einer Referenzspannungseinrichtung (RE) gebildetes internes Referenzsignal und an dessen zweiten Steuereingang ein an einer dritten Eingangsklemme (1) anschließbare und von der Ausgangsspannung (U_{A}) abhängige Regelspannung (U_{R}) anlegbar ist, und einem zwischen die zweite (8) und dritte Eingangsklemme (1) angeschlossenen kapazitiven Koppelnetzwerk (R20, C20) zum Reduzieren der Betriebsfrequenz im Stand-by-Betrieb der Schaltungsanordnung,
**dadurch gekennzeichnet,**
daß eine Detektoreinrichtung (DE) vorgesehen ist, durch die der Beginn des Stand-by-Betriebes mit reduzierter Betriebsfrequenz erfaßbar ist, daß die Detektoreinrichtung (DE) mit der Referenzspannungseinrichtung (RE) verbunden ist und daß das Referenzsignal, während des Stand-by-Betriebes derart variiert wird, daß die Ausgangsspannung im Stand-by-Betrieb reduziert ist.

2. Schaltungsanordnung nach Anspruch 1,
**dadurch gekennzeichnet,**
daß das Referenzsignal um 20 % verändert ist.

3. Schaltungsanordnung nach Anspruch 1 oder 2,
**dadurch gekennzeichnet,**
daß die Detektoreinrichtung (DE) eine Frequenzerfassungseinrichtung aufweist.

4. Schaltungsanordnung nach einem der Ansprüche 1 bis 3,
**dadurch gekennzeichnet,**
daß das kapazitive Koppelnetzwerk aus mindestens einer Reihenschaltung eine Widerstandes (R20) mit nachgeschaltetem Kondensator (C20) besteht.

5. Schaltungsanordnung nach Anspruch 4,
**dadurch gekennzeichnet,**
daß der Widerstand (R20) variabel ausgeführt ist.

6. Schaltungsanordnung nach einem der Ansprüche 1 bis 5,
**dadurch gekennzeichnet,**
daß die Steuereinrichtung (IC) eine Klingelunterdrückungsstufe (KU) aufweist, durch welche ein beim Übersteuern des Übertragers (T) auftretendes Trafoklingeln und die damit verbundenen Nulldurchgänge des Nulldurchgangdetektorsignals (U_{Null}) unterdrückbar sind.

7. Schaltungsanordnung nach einem der Ansprüche 1 bis 6,
**dadurch gekennzeichnet,**
daß die reduzierte Betriebsfrequenz im Stand-by-Betrieb zwischen 15 kHz und 60 kHz eingestellt ist.

## Claims

1. A free-running flyback-converter switched-mode power supply with a circuit arrangement for generating an output voltage (U_{A}), comprising an electric switching element (T1) for the switched application of a direct voltage to a first winding (n₂) of a transformer (T), using a control device (IC) for the pulse-width-modulated activation of the electric switching element (T1) as determined by at least one primary current signal which can be connected to a first input terminal (2), a zero-crossing signal which can be connected to a second input terminal (8) and determines the pulse start and a difference signal obtained from a comparator amplifier (K) and determining the pulse width, in which arrangement an internal reference signal formed from a reference voltage device (RE) can be applied to the first control input of the comparator amplifier (K) and a control voltage (U_{R}), which can be connected to a third input terminal (1) and is dependent on the output voltage (U_{A}) can be applied to its second control input, and a capacitive coupling network (R20, C20), connected between the second (8) and third input terminal (1), for reducing the operating frequency in the stand-by mode of the circuit arrangement, characterised in that a detector device (DE) is provided by means of which the beginning of stand-by operation with reduced operating frequency can be detected, in that the detector device (DE) is connected to the reference voltage device (RE), and in that the reference signal is varied during the stand-by operation in such a manner that the output voltage is reduced in stand-by mode.

2. Circuit arrangement according to Claim 1, characterised in that the reference signal is changed by 20%.

3. Circuit arrangement according to Claim 1 or 2, characterised in that the detector device (DE) exhibits a frequency detection device.

4. Circuit arrangement according to one of Claims 1 to 3, characterised in that the capacitive coupling network consists of at least one series circuit of a resistor (R20) followed by a capacitor (C20).

5. Circuit arrangement according to Claim 4, characterised in that the resistor (R20) is constructed to be variable.

6. Circuit arrangement according to one of Claims 1 to 5, characterised in that the control device (IC) exhibits a ring-suppression stage (KU), by means of which a transformer ringing occurring when the transformer (T) is overdriven and the associated zero crossings of the zero crossing detector signal (U_{Null}) can be suppressed.

7. Circuit arrangement according to one of Claims 1 to 6, characterised in that the reduced operating frequency in stand-by mode is set to between 15 KHz and 60 KHz.

## Revendications

1. Bloc d'alimentation commuté du secteur à convertisseur à oscillateur bloqué à oscillation libre, comportant un montage servant à produire une tension de sortie (U_{A}) et possédant un élément de commutation électrique (T1) pour l'application cadencée d'une tension continue à un premier enroulement (n₂) d'un transformateur (T) moyennant l'utilisation d'un dispositif de commande (IC) pour commander, d'une manière modulée par une modulation d'impulsions en durée, l'élément de commutation électrique (T1) en fonction d'au moins un signal de courant primaire pouvant être appliqué à une première borne d'entrée (2), d'un signal de passage par zéro (U_{zéro}) qui peut être appliqué à une seconde borne d'entrée (8) et détermine le début des impulsions, ainsi que d'un signal de différence, qui est obtenu à partir d'un amplificateur comparateur (K) et qui détermine la durée des impulsions, et dans lequel un signal de référence interne, formé à partir d'un dispositif (RE) délivrant une tension de référence, peut être appliqué à la première entrée de commande de l'amplificateur comparateur (K) et une tension de réglage (U_{R}), qui peut être appliquée à une troisième borne d'entrée (1) et qui dépend de la tension (U_{A}), peut être appliquée à la seconde entrée de commande de l'amplificateur comparateur, et comportant un réseau de couplage capacitif (R20,C20), qui est branché entre la seconde borne d'entrée (8) et la troisième borne d'entrée (1)
et qui sert à réduire la fréquence de service dans le fonctionnement du montage en position d'attente,
caractérisé par le fait
qu'il est prévu un dispositif détecteur (DE), qui permet de détecter le début du fonctionnement en position d'attente avec une fréquence de service réduite, que ce dispositif détecteur (DE) est raccordé au dispositif (RE) délivrant la tension de référence et que le signal de référence est modifié pendant le fonctionnement en position d'attente de telle sorte que la tension de sortie est réduite pendant ce fonctionnement en position d'attente.

2. Montage suivant la revendication 1, caractérisé par le fait que le signal de référence est modifié de 20 %.

3. Montage suivant la revendication 1 ou 2, caractérisé par le fait que le dispositif détecteur (DE) possède un dispositif de détection de la fréquence.

4. Montage suivant l'une des revendications 1 à 3, caractérisé par le fait que le réseau de couplage capacitif est constitué par au moins un circuit série formé d'une résistance (R20) en aval de laquelle est branché un condensateur (C20).

5. Montage suivant la revendication 3, caractérisé par le fait que la résistance (R20) est variable.

6. Montage suivant l'une des revendications 1 à 5, caractérisé par le fait que le dispositif de commande (IC) possède un étage (KU) de suppression de cliquetis, qui supprime un cliquetis du transformateur (T), qui apparaît dans le cas d'une surmodulation de ce dernier, et les passages par zéro, qui y sont liés, du signal (U_{zéro}) du détecteur de passage par zéro.

7. Montage suivant l'une des revendications 1 à 6, caractérisé par le fait que la fréquence de service réduite dans le fonctionnement en attente est réglée entre 15 kHz et 60 kHz.
